Europäisches Patentamt

European Patent Office

Office européen des brevets

(19)

(11) EP 1 574 927 A1

(12) EUROPEAN PATENT APPLICATION

(43) Date of publication:
14.09.2005 Bulletin 2005/37

(51) Int Cl.⁷: **G05F 1/70**, H02J 3/18

(21) Application number: 05251450.2

(22) Date of filing: 10.03.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **10.03.2004 GB 0405331**

(71) Applicant: **Zodion Limited
Sowerby Bridge HX6 3AF (GB)**

(72) Inventors:
• **Fox, John
  West Yorkshire HX6 3AF (GB)**
• **Rhodes, Simon, Univations Limited
  Windsor, Berkshire SL4 1 EH (GB)**

(74) Representative: **Robinson, Ian Michael et al
Appleyard Lees,
15 Clare Road
Halifax HX1 2HY (GB)**

(54) **Power factor correction system**

(57) The present invention provides a method and apparatus (100) for adjusting a power factor of an electrical lighting load (L) comprising a power factor measurement unit (110) for measuring the power factor of an electrical lighting load (L) and a power factor adjustment unit (120) for adjusting the power factor of the electrical lighting load (L) in response to the power factor measurement. The present invention also provides an apparatus and method for controlling a street light comprising a photosensitive switching unit (130) arrangeable in use to switch on an electrical lighting load (L) in response to an ambient light level.

Figure 3

**Description**

The present invention relates to a device and method for improving the power factor of an electrical load.

Although persons skilled in the art of AC electrical engineering will be in general familiar with power factor, a brief introduction is now provided.

Power factor is a characteristic of an alternating current (AC) electrical load. Power factor defines the relationship between the actual power consumed by an electrical load, measured in Watts, and the apparent power consumed, which is measured in Volt-Amperes. The apparent power is the product of the root mean squared (RMS) voltage and the current.

The power factor (PF) of an AC electrical load is defined as:

$$PF = \text{Actual power} / \text{Apparent power}$$

The power factor of an electrical load always has a value of between 1 and 0, with 1 representing a 1:1 relationship between actual power and apparent power.

Ideally, an electricity generation company wishes to supply a consumer with an electrical supply having a power factor of 1, since electricity billing is measured in Watts or kW, whilst electricity supply is provided in Volt-Amperes (VA). Watts and VA are linked by the following equation, where PF represents the power factor:

$$\text{Watts} = VA * PF$$

For any circuit having a power factor of less than unity, the electricity company must supply a greater apparent power to achieve the same billable actual power supplied to the customer. Also, transmission of a higher electrical current results in increased losses in the cabling between the electricity generator and the consumer. These losses result from the $I^2R$ relationship between current (I) and the cabling resistance (R), creating a large amount of wasted power.

The power factor of an AC electrical load circuit is affected by the phase angle between the voltage and current supplied to the circuit, and the current waveform harmonics. Purely resistive loads have a power factor of unity, whilst purely reactive loads have a power factor of 0. Electrical loads having both a reactive and a resistive component have a power factor of between 0 and 1.

Power factor is particularly important for unmetered electrical supplies, due to the possibility of large amounts of unmetered wasted power. In particular, street lighting has been noted as a source of wasted power when the electrical load of a streetlight has a reduced power factor.

In this context, streetlights are taken to mean those lights provided, possibly in large numbers, to illuminate, for example, parks, pavements and roadways. However, the usefulness of the present invention is not limited to such streetlights and may be applied in other areas such as lighting for car parks, industrial units and the like, or for any other electrical loads.

Typically gas discharge lights, such as fluorescent lights, high-pressure sodium (SON), low-pressure sodium (SOX), and metal halide lights, and their associated support circuitry, are inductive in nature, which leads to a sub-unity power factor. A capacitor is often connected across the electrical supply within the light in order to improve the power factor. However, these capacitors frequently fail or deteriorate with age, leading to deterioration in the power factor. The choice of capacitor value used often takes little account of lamp aging or voltage fluctuations of the electrical supply.

Due to access difficulties and the large numbers of streetlights, there is a cost which prohibits or limits the testing of the power factor of each streetlight or the replacement of deteriorated capacitors. Equally, the capacitor may have an initial value which is not appropriate for the actual electrical load imposed by the streetlight and associated circuitry.

An aim of the present invention is to provide a device and method for adjusting the power factor of an electrical load with respect to an electrical supply.

Another aim of the present invention is to provide a device and method for adjusting a power factor of a streetlight. An aim of particularly preferred embodiments of the invention is to provide a device which is capable of retrofitting to existing streetlights with minimal cost and time.

Another preferred aim of the present invention is to provide a low-cost, physically small device, which does not require large value components to adjust a power factor of a streetlight upon an electrical supply.

According to the present invention there is provided an apparatus and method as set forth in the appended claims. Preferred features of the invention will be apparent from the dependent claims, and the description which follows.

According to a first aspect of the present invention there is provided a device for controlling a streetlight, comprising: a photosensitive switching unit arrangeable in use to switch on an electrical lighting load in response to an ambient light level; a power factor measurement unit for measuring a power factor of the electrical lighting load and outputting a power factor measurement signal in response thereto; and a power factor adjustment unit for adjusting the power factor of the electrical lighting load in response to the power factor measurement signal.

Preferably, the photosensitive switching unit, the power factor measurement unit and the power factor adjustment unit are adapted to engage in use with the streetlight through a plug and socket coupling.

Preferably, the device is arranged to engage in use with a readily releasable coupling of the streetlight.

Preferably, the readily releasable coupling is a 3-pin photocell socket defined by BS 5972.

Preferably, the photosensitive switching unit, the power factor measurement unit and the power factor adjustment unit are integrally located in a single housing.

Preferably, a housing of the device has at least one translucent portion for enabling the photosensitive switching unit to measure the ambient light level.

Preferably, the housing of the device is cylindrical.

Preferably, the power factor adjustment unit comprises a plurality of reactive components.

Preferably, each reactive component is individually and selectively couplable to the electrical supply of the electrical lighting load.

Preferably, at least one of the plurality of reactive components is a capacitor.

Preferably, the plurality of reactive components range upward in value according to a binary power sequence defined by the equation:

$$Z_n = 2^{n-1} * Z_1.$$

Preferably, the power factor adjustment unit comprises a control unit for receiving the power factor measurement signal, determining a necessary power factor adjustment of the electrical lighting load and outputting a power factor adjustment signal.

Preferably, the power factor adjustment unit comprises a switching control unit for receiving the power factor adjustment signal and controlling at least one switching means to selectively couple at least one reactive component to the electrical supply of the electrical lighting load.

Preferably, the electrical lighting load is a streetlight.

According to a second aspect of the present invention there is provided a method for controlling a streetlight, comprising the steps of: switching on an electrical lighting load in response to a measured ambient light level; measuring a power factor of the electrical lighting load; adjusting the power factor of the electrical lighting load in response to the measured power factor of the electrical lighting load.

Preferably, a switch-on point of the electrical lighting load is determined with reference to at least one predetermined ambient light level.

Preferably, the power factor of the electrical lighting load is measured and adjusted according to the method of the third aspect of the present invention.

Preferably, the power factor is adjusted toward a value of unity in order to improve the power factor.

Preferably, at least one reactive component is selected from amongst a plurality of reactive components.

Preferably, at least one reactive component is selected by a binary search of the plurality of reactive components.

For a better understanding of the invention, and to show how embodiments of the same may be carried into effect, reference will now be made, by way of example, to the accompanying diagrammatic drawings in which:

Figure 1 is a diagram of an example streetlight;

Figure 2 is schematic circuit diagram of a device according to a first preferred embodiment of the present invention;

Figure 3 is a schematic circuit diagram of a device according to a second preferred embodiment of the present invention;

Figure 4 is a perspective view of a device according to an embodiment of the present invention adapted to fit a 3-pin photocell socket on a streetlamp head; and

Figure 5 is a perspective view of a preferred device arranged in use on a streetlamp head.

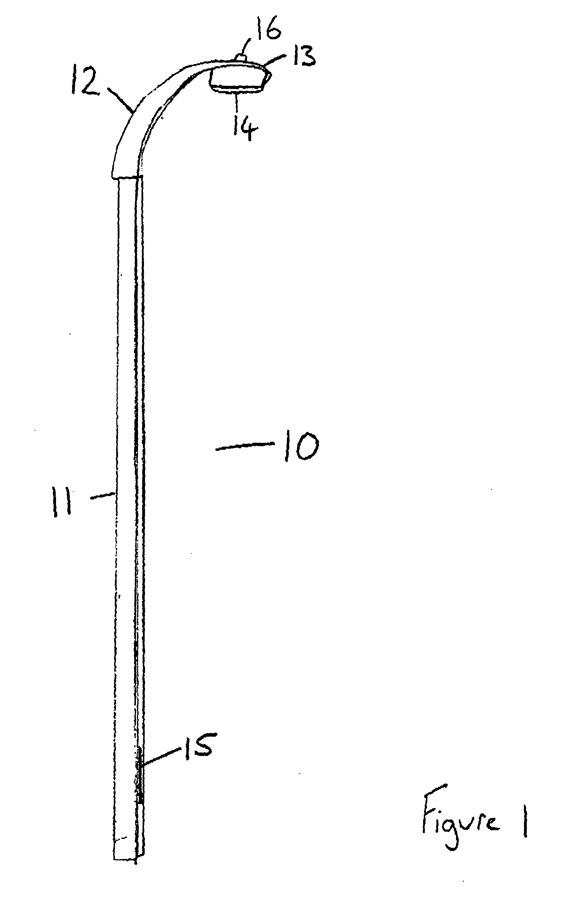

As shown in Figure 1, a streetlight 10 comprises an upwardly extending elongate body 11 which may be made of, for example, concrete or steel, and an arm 12 extending therefrom which carries a head of the streetlight 13.

The streetlight head 13 typically comprises an enclosure 14 having a lower transparent housing, with a lighting unit (not shown) comprising one or more bulbs. The bulbs may be one of many types including, but not limited to, SON, SOX or metal halide.

The streetlight 10 is connected to an underground electrical supply (not shown). An access hatch 15 is located at a lower portion of the elongate body 11.

The streetlight head 13 has a light sensitive switching unit 16 mounted thereon, which measures an ambient light level and switches the streetlight 10 on and off accordingly.

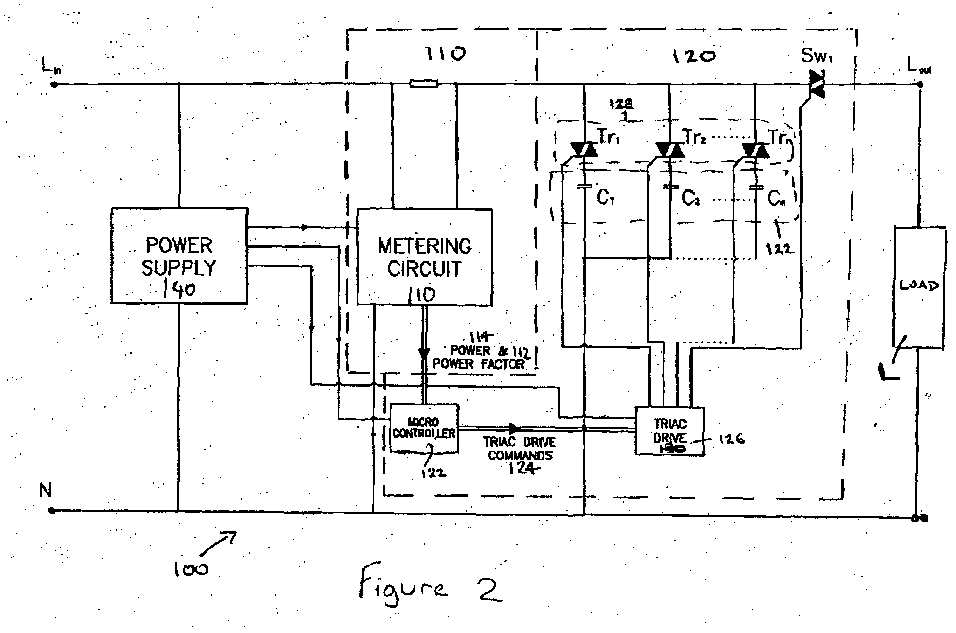

Figure 2, is a schematic circuit diagram of a device 100 according to a first preferred embodiment of the present invention, comprising a power factor measurement unit 110 and a power factor adjustment unit 120.

In use, the power factor measurement unit 110 measures the power factor of an electrical load with respect to an electrical supply $L_{in}$, N. Suitably, the load is an electrical lighting load, comprising a lamp, and an associated ballast and a control circuit as required for operation of the lamp.

The power factor adjustment unit 120 adjusts the power factor of the electrical load in response to the power factor measured by the power factor measurement unit 110. In the preferred embodiment of the present invention, the power factor of the electrical load is adjusted towards an ideal power factor of unity. In some situations, an improvement of the power factor to a sub-unity value such as 0.9 or 0.95 will be considered acceptable.

Operation of the device 100 will now be outlined. Power factor is commonly calculated using one or both of the following equations:

$$PF = R/Z = \cos \Phi;$$

$$PF = \text{Actual power} / \text{Apparent power}$$

where $\Phi$ is the phase angle between a voltage and a current waveform of the electrical supply to the electrical load, R is the load resistance and Z is the impedance of the load. The power factor of the electrical load is adjusted by controlling the phase angle between the voltage and current waveforms.

As shown in Figure 2, the power factor adjustment unit 120 comprises a plurality of electrically reactive components 122. Each of the reactive components 122 is individually and selectively couplable to the electrical supply of the electrical load. In use, an appropriate reactance value is selected and coupled to the electrical supply, in order to accurately adjust the power factor of the electrical load.

Suitably, at least one of the plurality of reactive component 122 is a capacitor $C_1...C_n$, to adjust the power factor of an inductive electrical load such as a streetlight. Alternatively, one or more inductors are used to adjust the power factor of a capacitive load, or a combination of inductors and capacitors are used.

The values of the reactive components $C_1 - C_n$ are chosen to have a binary power sequence. Using, as an example, four capacitors $C_1$, $C_2$, $C_3$ and $C_4$, if capacitor $C_1$ has a value of 1pF, the value of $C_2$ is calculated by the equation $C_2 = 2^1 * C_1 = 2pF$. In the same manner, the value of $C_3$ is calculated using the equation $C_3 = 2^2 \times C_1 = 4pF$ and similarly, $C_4$ has a value of $C_4 = 2^3 \times C_1 = 8pF$. In this way, the values of the reactive components $C_1 - C_4$ have a binary power sequence extending upward in value from $C_1$ to $C_4$. The value of each reactive component is calculable with the equation $Z_n = 2^{n-1} \times Z_1$.

It will be appreciated by those skilled in the art that an exact choice of capacitor value cannot always be made due to the restrictions imposed by the ranges of preferred capacitor values which are commercially available. However, in such cases the capacitor values are chosen to approximate the calculated value.

Advantageously, this choice of values allows a search algorithm such as a binary search sequence to be performed, in order to find the most appropriate selection of reactance values to couple to the electrical supply of the electrical load. A preferred method for adjusting the power factor of an electrical load will be explained in detail later.

The power factor measurement unit 110 is arranged to measure the power factor. In the preferred embodiment, an integrated circuit is used such as an ADE7753 single-phase multi function metering IC available from Analog Electronics of Norwood, Massachusetts, USA.

The ADE7753 integrated circuit provides a complete metering device capable of measuring numerous aspects of an electrical supply to an electrical load. For example, both the power factor and the power consumption of the electrical load are measured. However, the present invention is not limited to the use of such a device and any appropriate circuitry for power factor and power consumption measurement may be used, as will be appreciated by those skilled in the art.

The power factor measurement unit 110 is arranged to output a power factor measurement signal 112 in response to the power factor of the electrical load. In this example embodiment, the circuit 110 also outputs a power consumption signal 114 in response to the electrical power consumed by the electrical load,

A control unit 124 receives the power factor measurement signal 112 from the power factor measurement unit 100, and determines whether any power factor adjustment is required. For example, the control unit 122 may determine that if the power factor of the electrical load has fallen below a predetermined level of 0.9, a power factor adjustment should be applied to the electrical load. The control unit 124 outputs a power factor adjustment signal 125. In response, a switching control unit 126 controls a plurality of switch units 128.

Any suitable switching means can be used to couple the reactive components 122 to the electrical supply, such as relays, MOSFETs or other appropriate devices.

In the preferred embodiment of the present invention, the switch units 128 are a plurality of triacs $Tr_1$, $Tr_2$,... $Tr_n$ and the switching control unit 126 is a triac drive unit.

The switching control unit 126 receives the drive command 122 from the control unit 120 and output signals suitable for operating the plurality of triacs $Tr_1 - Tr_n$. The signals output by the control unit 126 are of a suitable voltage level and duration for operation of the plurality of triacs 128 to individually and selectively couple the plurality of reactances 122 in parallel with the electrical load L.

A power supply 140 provides a power supply suitable for use by the circuitry of the device 100. The device 100 will frequently be used with high voltage AC electrical supplies, and the power supply 140 conditions the electrical supply for use with lower voltage DC circuitry.

In particularly preferred embodiments of the invention, the device 100 is used to adjust the power factor of a streetlight. Conveniently, the device 100 is coupled with any available electrical connection of the streetlight. In particular, the device 100 is connected through a plug and socket coupling, internal to the streetlight. For example, the device 100 is installed through the access hatch 15 or within the streetlight head 13.

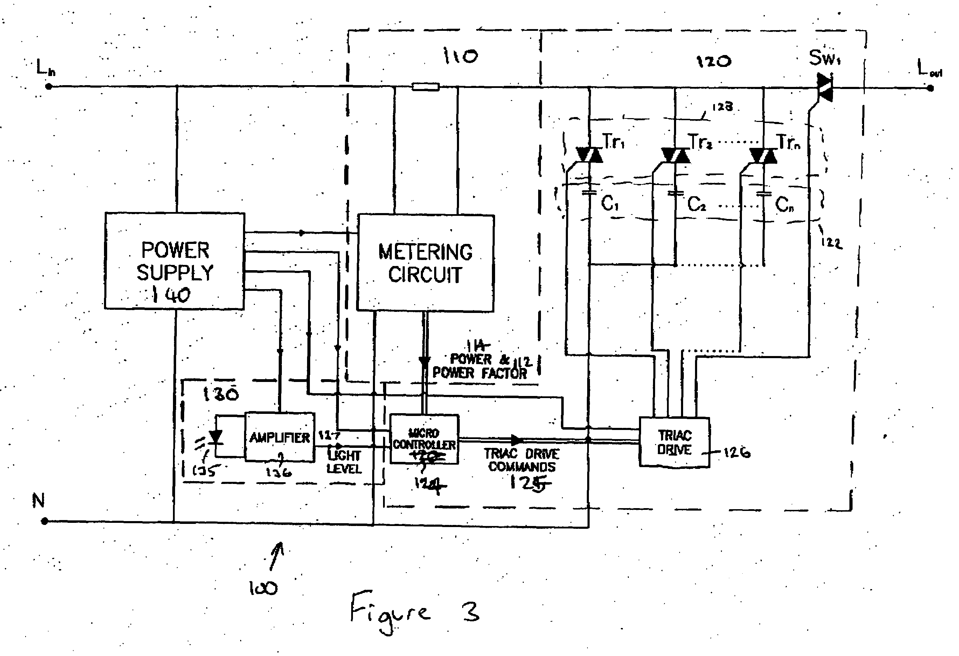

Figure 3 is a schematic circuit diagram of a device according to a second preferred embodiment of the present invention comprising the power factor measurement unit 110 and power factor adjustment unit 120 as previously described, together with a photosensitive switching unit 130.

The photosensitive switching unit 130 automatically switches the load to, such as a streetlight, in response to an ambient light level. The photosensitive switching unit 130 comprises a photodetector 135, which is arranged to measure and produce an electrical signal in response to the ambient light level. An amplifier 136 amplifies the electrical signal output by the photodetector 135 in order to produce an amplified light level signal 137.

Suitably, the control unit 122 is additionally arranged to receive the amplified light level signal 137 and control switching of the streetlight. For example, the control unit 122 determines if the ambient light level has fallen below a switch-on level. The streetlight may also be switched off in response to the ambient light level rising or a timer function may be used to switch off the streetlight at a predetermined time of day, or at a predetermined time after switching on.

If the control unit 122 determines that the ambient light level has fallen below or has risen above a predetermined level, the control unit 122 outputs a further switching command in order to switch the streetlight on or off as required.

In the preferred embodiment of the present invention, a power switching triac $Sw_1$ switches the streetlight on or off in response to an appropriate drive command from the switching unit 126.

The preferred embodiment of the present invention is arranged to engage in use with a plug and socket coupling of the streetlight. Ideally the plug and socket is a readily releasable coupling of the streetlight. Advantageously this allows easy integration of the present invention with an existing streetlight.

Commonly, the photosensitive switch unit 15 shown in Figure 1 engages with a streetlight head 13 via a 3-pin photocell socket defined by British standard BS 5972. The use of a coupling complying with the BS 5972 3-pin photocell socket allows universal connection to streetlights produced by numerous manufacturers. The BS 5972 defined 3-pin photocell socket is also commonly referred to as a National Electrical Manufacturers Association (NEMA) socket.

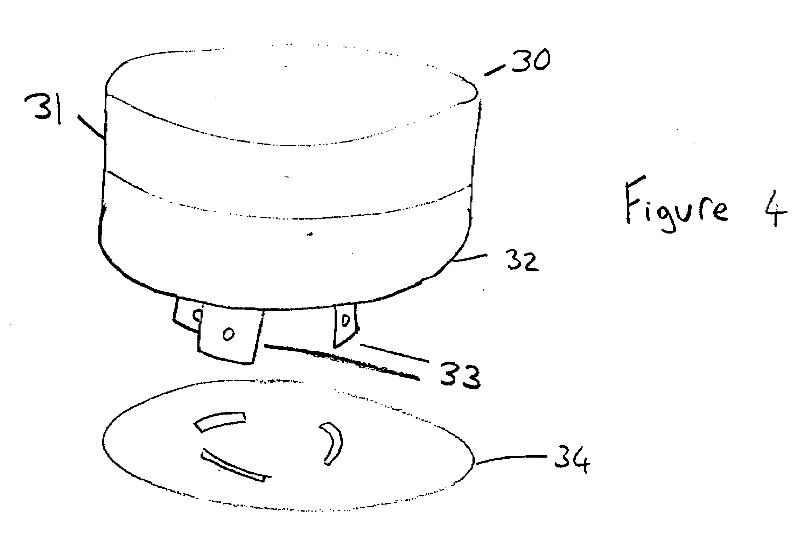

As shown in Figure 4, ideally the device 100 is housed within a casing 30 which is designed to comply with the BS 5972 3-pin photocell socket, thereby enabling very simple and convenient direct connection to a streetlight head 13.

The embodiment of the present invention shown in Figure 4 is housed within a cylindrical housing 30 having an upper transparent cover 31, and a base arranged to couplably engage with a 3-pin photocell socket 34 of the streetlight head 13. The base 32 of the housing suitably comprises three plug connections 33: a live input, a neutral and a live output terminal, for connection to the 3-pin photocell socket 34 on the streetlight head 13.

It will be understood that, whilst the BS5972 3-pin photocell socket has been chosen as an example, the present invention is not limited to engaging with a socket of this type.

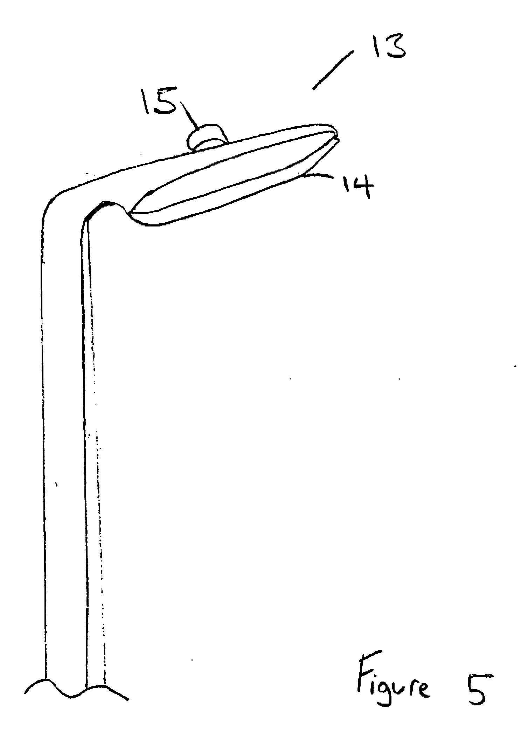

Figure 5 shows a preferred embodiment of the arranged in use engaged with the 3-pin photocell socket and mounted upon a streetlight head 13.

A method of adjusting the power factor of an electrical load will now be described. Firstly, the power factor of the electrical load is measured. In response to the measurement of the power factor of the electrical load, the power factor is adjusted toward a desired value. The adjustment toward the desired value is accomplished by the selective coupling of at least one reactive component to the electrical supply of the electrical load. The coupling of at least one reactive component to the electrical supply adjusts a phase angle between a voltage waveform and a current waveform of the electrical supply. Ideally, the power factor is adjusted toward a value of 1 or a predetermined acceptable level.

When the method previously described is used to control a streetlight, the method may include the steps of switching on the streetlight in response to an ambient light level prior to the measurement of the power factor of the electrical load.

A method of finding the most appropriate combination of capacitor values to connect to the electrical supply lines will now be described, with reference to the circuit illustrated in Figures 2 and 3.

If the present invention determines that the power factor of the electrical supply to the load has fallen below a predetermined value, the present invention carries out a binary search of the capacitors $C_1..C_n$. The binary search has as its object the aim of determining the most appropriate combination of capacitors to connect to the electrical supply in a short amount of time.

The binary search is implemented in the example system having capacitors $C_1$ through $C_4$ by first selecting the capacitor $C_4$ as having a value of halfway between 0 and + $C_2$ + $C_3$+ $C_4$ = $C_{max}$. If it is determined that the value of $C_4$ is below that required, capacitors $C_4$ and $C_3$ are selected together as having a value approximately halfway between $C_4$ and the sum of $C_{max}$. Equally, if it is determined that the value of $C_4$ is above that required, $C_3$ is selected alone as giving a capacitance value halfway between $C_4$ and 0. This process is repeated iteratively until a suitable capacitor value or combination of capacitor values is chosen. Each iteration of the search process successively approximates closer toward a capacitance value necessary to achieve an appropriate power factor adjustment.

Advantageously, because the power factor of the electrical load is adjusted in response to the power factor measurement, should the capacitors $C_1$ - $C_4$ used in the example system deteriorate in use over a period of time, the method of the present invention compensates for any reduction in each individual capacitance value by automatically finding the most appropriate remaining physical capacitance to couple to the electrical supply.

A binary search is provided as an example, but it will be understood by those skilled in the art that other methods of searching a binary array of values are available and that the present invention is not limited to the example method disclosed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A device for controlling a streetlight, comprising:

   a photosensitive switching unit arrangeable in use to switch on an electrical lighting load in response to an ambient light level;

   a power factor measurement unit for measuring a power factor of the electrical lighting load and outputting a power factor measurement signal in response thereto; and

   a power factor adjustment unit for adjusting the power factor of the electrical lighting load in response to the power factor measurement signal.

2. The device according to claim 1, wherein:

   the photosensitive switching unit, the power factor measurement unit and the power factor adjustment unit are adapted to engage in use with the streetlight through a plug and socket coupling.

3. The device according to claim 1 or 2, wherein:

   the device is arranged to engage in use with a readily releasable coupling of the streetlight.

4. The device according to claim 3, wherein the readily releasable coupling is a 3-pin photocell socket defined by BS 5972.

5. The device according to any of claims 1 to 4, wherein the photosensitive switching unit, power factor measurement unit and power factor adjustment unit are integrally located in a single housing.

6. The device according to any of claims 1 to 5, wherein:

   a housing of the device has at least one translucent portion for enabling the photosensitive switching unit to measure the ambient light level.

7. The device according to any of claims 1 to 6, wherein a housing of the device is cylindrical.

8. The device according to any preceding claim, wherein:

   the power factor measurement unit is arranged for outputting a power factor measurement signal in response to the measured power factor; and

   the power factor adjustment unit is arranged for adjusting the power factor of the electrical lighting load in response to the power factor measurement signal by selectively coupling at least one reactive component to an electrical supply of the electrical lighting load, so as to adjust a phase angle between a voltage waveform and a current waveform of the electrical supply.

9. The device according to claim 8, wherein the power factor adjustment unit comprises:

   a plurality of reactive components.

10. The device according to claim 8 or 9, wherein each reactive component is individually and selectively couplable to the electrical supply of the electrical lighting load.

11. The device according to claim 9 or 10, wherein at least one of the plurality of reactive components is a capacitor.

12. The device according to claim 9, 10 or 11, wherein the plurality of reactive components range upward in value according to a binary power sequence defined by the equation:

$$Z_n = 2^{n-1} * Z_1.$$

13. The device according to any of claims 8 to 12, wherein the power factor adjustment unit comprises:

   a control unit for receiving the power factor measurement signal, determining a necessary power factor adjustment of the electrical lighting load and outputting a power factor adjustment signal.

14. The device according to claim 13, wherein the power factor adjustment unit comprises:

   a switching control unit for receiving the power factor adjustment signal and controlling at least one switching means to selectively couple at least one reactive component to the electrical supply of the electrical lighting load.

15. The device according to any preceding claims, wherein the electrical lighting load is a streetlight.

16. A method for controlling a streetlight, comprising the steps of:

   switching on an electrical lighting load in response to a measured ambient light level;

   measuring a power factor of the electrical lighting load;

   adjusting the power factor of the electrical lighting load in response to the measured power factor of the electrical lighting load.

17. The method according to claim 16, wherein a switch-on point of the electrical lighting load is determined with reference to at least one predetermined ambient light level.

18. The method of claim 16 or 17, wherein:

   the power factor of the electrical lighting load being adjusted in response to the measurement of the power factor of the electrical lighting load by selectively coupling at least one reactive component to an electrical supply of the electrical lighting load in order to adjust a phase angle between a voltage waveform and a current waveform of the electrical supply.

19. The method according to claim 18, wherein the at least one reactive component is selected from amongst a plurality of reactive components.

20. The method according to claim 19, wherein the at least one reactive component is selected by a binary search of the plurality of reactive components.

21. The method or apparatus of any preceding claim, wherein the power factor is adjusted toward a value of unity in order to improve the power factor.

Figure 1

Figure 2

Figure 3

Figure 4

Figure 5

**European Patent Office**

**EUROPEAN SEARCH REPORT**

Application Number

EP 05 25 1450

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2002/180408 A1 (MCDANIEL WILLIAM D ET AL) 5 December 2002 (2002-12-05) * abstract * * paragraph [0006] * * paragraphs [0026] - [0031]; figures 1,2 * ----- | 1-21 | G05F1/70 H02J3/18 |
| Y | GB 2 166 003 A (SEAN * NOONE) 23 April 1986 (1986-04-23) * abstract; figures 1-3 * ----- | 1-21 | |
| A | GB 1 535 739 A (FRAKO KONDENSATOREN APPARATEBAU GMBH) 13 December 1978 (1978-12-13) * page 1, line 5 - page 1, line 12 * ----- | 10-14, 17-21 | |
| A | WO 01/62052 A (SAIKKA, TAPANI, MARTTI, SAKARI) 23 August 2001 (2001-08-23) * abstract; figure 2 * ----- | 1-21 | |
| A | US 4 365 190 A (PASTERNACK ET AL) 21 December 1982 (1982-12-21) * abstract; figure 1 * ----- | 1-21 | TECHNICAL FIELDS SEARCHED (Int.Cl.7) G05F H02J H05B |
| A | US 4 055 374 A (BARBER, JR. ET AL) 25 October 1977 (1977-10-25) * abstract; figures 1-3 * ----- | 1-21 | |

The present search report has been drawn up for all claims

| Place of search | Date of completion of the search | Examiner |
|---|---|---|
| Munich | 23 May 2005 | Braccini, R |

EPO FORM 1503 03.82 (P04C01)

**EP 1 574 927 A1**

**ANNEX TO THE EUROPEAN SEARCH REPORT
ON EUROPEAN PATENT APPLICATION NO.**          EP 05 25 1450

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2005

| Patent document cited in search report | Publication date | Patent family member(s) | Publication date |
|---|---|---|---|
| US 2002180408 A1 | 05-12-2002 | US 6462519 B1<br>CA 2449792 A1<br>CN 1533524 A<br>EP 1395889 A1<br>JP 2005502938 T<br>WO 02099552 A1<br>US 2004164718 A1 | 08-10-2002<br>12-12-2002<br>29-09-2004<br>10-03-2004<br>27-01-2005<br>12-12-2002<br>26-08-2004 |
| GB 2166003 A | 23-04-1986 | CA 1338476 C<br>IE 55885 B1<br>GB 2203240 A ,B<br>US 4791290 A<br>IE 55886 B1 | 23-07-1996<br>14-02-1991<br>12-10-1988<br>13-12-1988<br>14-02-1991 |
| GB 1535739 A | 13-12-1978 | NONE | |
| WO 0162052 A | 23-08-2001 | FI 107579 B1<br>AU 3745701 A<br>EP 1262090 A1<br>WO 0162052 A1 | 31-08-2001<br>27-08-2001<br>04-12-2002<br>23-08-2001 |
| US 4365190 A | 21-12-1982 | NONE | |
| US 4055374 A | 25-10-1977 | NONE | |

EPO FORM P0459

For more details about this annex : see Official Journal of the European Patent Office, No. 12/82

14